# FASCICULE DE BREVET EUROPEEN

(11) **EP 1 485 292 B1**
(45) Date de publication et mention de la délivrance du brevet: **23.07.2008**
(21) Numéro de dépôt: 03727593.0
(22) Date de dépôt: 18.03.2003
(51) Int. Cl.: B64G 1/28, G05D 1/08, G01C 19/02

(54) **ACTIONNEUR GYROSCOPIQUE DE PILOTAGE DE L'ATTITUDE D'UN VEHICULE SPATIAL**
STEUERMOMENTKREISEL FÜR DIE LAGEREGELUNG EINES RAUMFAHRZEUGES
CONTROL MOMENT GYRO FOR ATTITUDE CONTROL OF A SPACECRAFT

(30) Priorité: 21.03.2002 FR 0203569
(43) Date de publication de la demande: 15.12.2004
(73) Titulaire: EADS ASTRIUM SAS, 31402 Toulouse Cedex 4 (FR)
(72) Inventeur: DEFENDINI, Ange, F-31380 Montjoire (FR); GUAY, Pascal, F-31140 Saint-Loup Cammas (FR); FAUCHEUX, Philippe, F-31150 Gagnac sur Garonne (FR)
(74) Mandataire: Bérogin, Francis
(86) Numéro de dépôt international: PCT/FR2003/000855
(87) Numéro de publication internationale: WO 2003/080439

(56) Documents cités:
- EP-A- 1 070 665
- US-A- 6 135 392

## Description

La présente invention concerne les gyrodynes ou actionneurs gyroscopiques (désignés souvent par le sigle anglo-saxon cmg pour control moment gyro); ils se différencient des roues de réaction couramment utilisées pour commander l'attitude d'un véhicule spatial et notamment d'un satellite par échange de moment cinétique, en ce que la roue est montée sur un support, appelé cardan, orientable par au moins un moteur autour d'au moins un axe qui est orthogonal à l'axe de rotation de la roue. Dans la plupart des cas la toupie de la roue tourne à vitesse constante ou du moins peu variable lors de sa mise en oeuvre.

L'orientation d'un trièdre de référence lié au corps d'un satellite peut être commandée autour de trois axes par une grappe d'au moins trois actionneurs gyroscopiques dont le cardan ne présente qu'un seul axe d'orientation de l'axe de la roue; deux actionneurs gyroscopiques suffisent pour un pilotage 2 axes. En pratique on utilise en général au moins quatre actionneurs gyroscopiques en grappe pour assurer une redondance pour le pilotage 3D. Un exemple particulièrement avantageux de système de commande d'attitude par actionneurs gyroscopique est donné dans le brevet FR 98 14548 ou le brevet US 6 305 647 auxquels on pourra se reporter

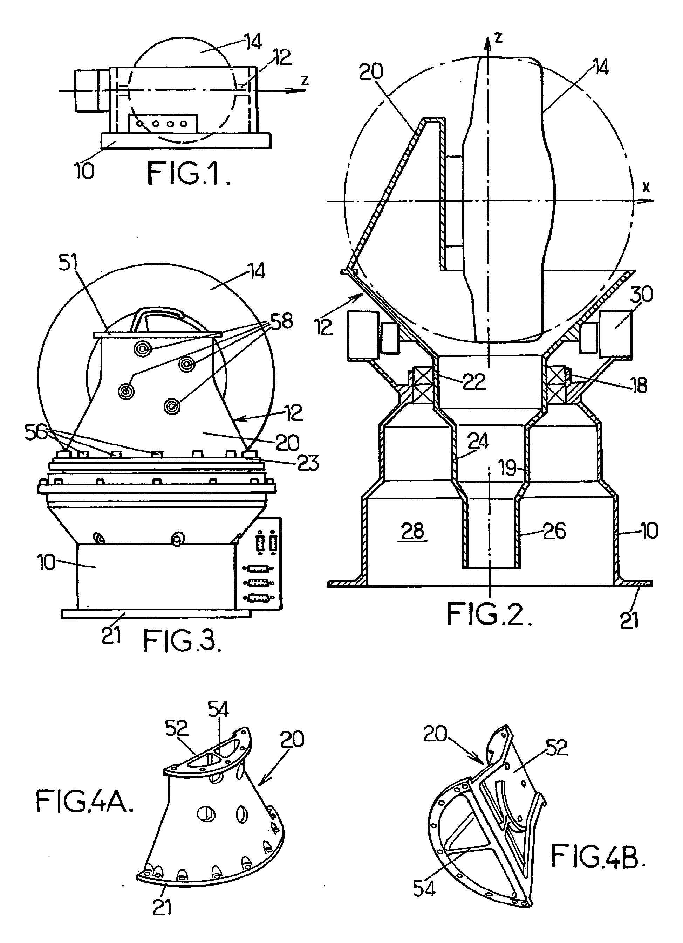

La plupart des actionneurs gyroscopiques existants ont une architecture du genre schématisée en figure 1. L'actionneur gyroscopique comporte une embase 10 destinée à être fixée au corps du satellite. Elle peut de plus définir, avec une enveloppe étanche non représentée, un volume dans lequel est placée la partie active de l'actionneur. Sur l'embase est monté un support de roue 12 qu'un moteur peut orienter sur l'embase autour d'un axe z. On désignera par la suite par le terme «roue » 14 un ensemble qui comporte une partie solidarisée du support et une toupie pouvant tourner sur le support autour d'un axe x orthogonal à l'axe z de rotation du support. Un moteur électrique entraîne la roue, généralement à vitesse constante et régulée.

Le support, qu'on qualifie généralement de cardan, bien qu'il ne puisse orienter l'axe de la roue qu'autour d'un seul axe, présente généralement une forme annulaire centrée sur l'axe z. Il entoure complètement la roue ou toupie. En conséquence, l'ensemble occupe un volume important et a une masse élevée à rigidité et pour un moment cinétique maximum donné. Or les contraintes rencontrées à bord d'un satellite obligent à réduire le plus possible l'encombrement et la masse des actionneurs gyroscopiques à capacité donnée de moment cinétique.

La présente invention vise notamment à fournir un actionneur gyroscopique ayant un encombrement et une masse réduites, une rigidité de structure globale élevée, pouvant être réalisé sous une forme facilitant la constitution des interfaces avec le corps du satellite et l'intégration de l'ensemble.

L'invention propose notamment, dans ce but, un actionneur gyroscopique comprenant une structure support de roue montée sur une embase par des moyens permettant de la faire tourner autour d'un premier axe et portant une roue munie de moyens permettant d'entraîner la toupie de la roue à vitesse élevée autour d'un second axe orthogonal au premier, dont la structure support comporte une pièce tubulaire tournant sur l'embase et un flasque placé d'un seul côté de la roue et fixé d'une part à la roue, d'autre part sur la pièce tubulaire, le diamètre de la roue et l'emplacement de fixation de la roue sur le flasque étant proportionnés de façon que la roue pénètre axialement dans la pièce tubulaire, et éventuellement dans l'embase.

Grâce à cette disposition, on peut réduire l'encombrement le long de l'axe de rotation du cardan puisque la roue pénètre à l'intérieur de la pièce tubulaire et souvent aussi de l'embase. On réduit également l'encombrement nécessaire au débattement et l'empreinte sur le satellite, puisque le diamètre de la structure support est égal au diamètre de la roue et le diamètre de l'embase peut être nettement inférieur au diamètre de la roue.

Le flasque a avantageusement une forme générale de fraction angulaire de tronc de cône dont la partie terminale la plus large est fixée à la pièce tubulaire et la partie terminale la moins large porte la roue.

Le flasque peut présenter une partie semi-cylindrique de fixation de la roue (du côté de la face terminale la moins large) et une bride de fixation sur la pièce tubulaire (du côté de la partie terminale la plus large).

Le flasque présente avantageusement des nervures internes lui donnant une rigidité élevée, permettant d'amener le premier mode de vibration global de la structure à une valeur élevée, pour une masse donnée, notamment au-delà de 100 Hertz. Ces nervures peuvent comporter deux cloisons disposées à 90° degrés l'une de l'autre, l'une en face de la roue, l'autre perpendiculaire à la première.

La pièce tubulaire - qu'on qualifiera par la suite quelquefois de « cône », présente une première fraction, avantageusement en forme de tronc de cône dont la grande base est fixée au flasque. Cette forme conique participe à la grande rigidité de la structure support. La partie de grand diamètre du cône porte avantageusement le rotor du moteur d'orientation de la structure support, c'est à dire du cardan. Le cône proprement dit est avantageusement prolongé par une partie tubulaire qui porte successivement la partie tournante d'un roulement de montage sur l'embase, la partie tournante d'un codeur angulaire et une partie de moyens de transfert de puissance et de signaux entre la structure support et l'embase. La partie tubulaire prolongeant le cône présente avantageusement plusieurs portions cylindriques de diamètres décroissant depuis le niveau du roulement jusqu'au niveau du transfert de puissance et de signaux.

Les caractéristiques ci-dessus ainsi que d'autres apparaîtront mieux à la lecture de la description qui suit d'un mode particulier de réalisation de l'invention, donné à titre non limitatif. La description se réfère aux dessins qui l'accompagnent, dans lesquels:
- la figure 1, déjà mentionnée, est une vue en coupe par l'axe du cardan d'un actionneur de type connu
- la figure 2 est une représentation de principe d'un actionneur gyroscopique suivant un mode de réalisation de l'invention, en coupe par un plan passant par l'axe du cardan;
- la figure 3 est une vue en élévation d'un actionneur gyroscopique ayant la constitution de principe montrée en figure 2 ;
- les figures 4A et 4B sont deux vues en perspective du flasque de l'actionneur de la figure 3 ;
- la figure 5 est une vue en élévation et en coupe partielle d'un actionneur suivant une variante de réalisation.

Sur la figure 2, qui montre l'architecture de principe d'un actionneur, on retrouve une embase 10 qui lors de l'utilisation peut être dans une orientation quelconque sur laquelle tourne une structure support 12 à laquelle est fixée la roue 14. La structure support est en plusieurs pièces assemblées. Ces pièces comprennent une pièce tubulaire 19 (en bas sur la figure 2) dont la partie haute est en forme de tronc de cône, portée sur l'embase 10 par un roulement 18, et un flasque 20 placé d'un seul côté de la roue et fixé d'une part à la partie non tournante de la roue, d'autre part à la pièce tubulaire. Le diamètre de la roue 14, les dimensions relatives de la structure support 12 et de l'embase 10 et l'emplacement de fixation de la roue sur le flasque sont proportionnés de façon que la roue soit en saillie dans la pièce tubulaire et que le volume balayé par la roue en fonctionnement (indiqué en traits interrompus) n'ait pas un diamètre autour de l'axe z supérieur à celui de la bride 21 de l'embase. On minimise ainsi l'encombrement du fait de la pénétration du montage en porte à faux et de la pénétration de la roue dans le cardan.

La pièce tubulaire 19 comporte, en plus d'une fraction en forme de tronc de cône dont la grande base est fixée au fiasque, un prolongement tubulaire présentant une forme étagée, avec des diamètres progressivement décroissants depuis le tronc de cône jusqu'à l'extrémité basse. Un premier tronçon cylindrique 22 est solidaire de la partie tournante du roulement 18 dont la partie fixe est montée sur l'embase 10. Le second tronçon 24, de plus faible diamètre que le premier, porte la partie tournante d'un codeur angulaire non représenté: Enfin, un troisième tronçon 26 présente, dans le cas de la figure 2, un diamètre encore plus réduit de façon à laisser libre, entre ce tronçon et la partie basse de l'embase 10, une zone annulaire 28 de dimension suffisante pour y loger des moyens de transfert de signaux et de puissance à câble souple, enrouleur ou collecteur tournant.

On décrira maintenant la constitution du mode particulier de réalisation illustré à titre d'exemple sur les figures 3 et suivantes, où les éléments correspondant à ceux de la figure 2 portent le même numéro de référence.

L'embase 10 présente une partie cylindrique basse munie de la bride 21 et une partie évasée haute, qui porte le stator du moteur électrique 30 d'orientation du cardan. Ce moteur 30 est par exemple un moteur couple à aimants permanents, commandé par une boucle de commande dont l'entrée est reliée à un système extérieur. Ce moteur couple peut être remplacé par un moteur pas à pas.

Dans un mode particulier de réalisation le roulement 18 (figure 2) comporte un jeu de deux paliers alignés, montés dos à dos. Ces paliers peuvent notamment être constitués par des roulements à billes ou rouleaux. Dans ce dernier cas, la couronne de billes de chaque palier est prévue de façon à avoir un appui oblique sur les bagues, de sorte que les forces exercées sur les billes occupent les génératrices d'un cône. Grâce au montage de deux roulements dos à dos, les sommets des deux cônes peuvent être éloignés l'un de l'autre, par exemple, l'un au niveau du centre de la roue et l'autre à l'intérieur de la zone 26. Par un choix approprié du diamètre des roulements et de l'angle de contact (angle entre la direction d'appui des billes et les bagues du roulement), on peut réaliser le meilleur compromis possible entre la reprise des efforts lors du lancement, la réduction des frottements au cours de l'utilisation en vol et le volume occupé par le roulement dans son ensemble.

La position angulaire du cardan est donnée à tout instant par le codeur présentant une partie fixée rigidement à l'embase 10 et une partie rotorique reliée à la structure support.

On peut notamment utiliser un codeur optique, à sortie incrémentale sous forme de signaux en quadrature qui peuvent être traités par une électronique de proximité capable de fonctionner en pointage fin.

Un codeur optique présente de nombreux avantages par rapport aux codeurs électriques tels que les résolveurs. Il permet d'obtenir une précision élevée. Il est possible d'obtenir une précision meilleure que plus ou moins trois secondes d'angle, largement suffisante pour un positionnement satisfaisant du moment cinétique.

Les moyens de passage des signaux de mesure et de l'alimentation électrique, commandée depuis l'extérieur, doivent tolérer la rotation du cardan, du moins dans un domaine angulaire limité.

Comme l'on a indiqué plus haut, on peut utiliser un connecteur tournant à bagues et balais. Il a l'avantage de n'apporter aucune limite à la rotation du cardan, mais l'inconvénient d'un couple de frottement qui peut devenir élevé lorsque le nombre de signaux à transférer est important. Un autre avantage de la transmission par bagues et balais est le fait que l'on peut laisser dériver librement en rotation la roue au cours de la phase de lancement.

On peut également utiliser des moyens de passage de signaux à câble souple multi-conducteurs et enrouleur de câble. Les enrouleurs de câble habituels comprennent un câble souple contenant une nappe, de conducteurs, reliant deux tambours pouvant tourner l'un par rapport à l'autre. Chaque extrémité du câble est fixée à un des tambours et le câble s'enroule et se déroule lorsque les tambours tournent l'un par rapport à l'autre. Le couple de frottements d'un tel enrouleur est beaucoup plus faible que celui d'un connecteur tournant et les contacts sont meilleurs.

Le flasque 20 présente, dans le cas illustré, une forme complexe. Il est constitué en une seule pièce pour des questions de rigidité et de robustesse. Sa surface extérieure se présente comme un secteur angulaire d'une surface de révolution. Elle a, une fraction en forme de tronc de cône, terminée par la bride 23 de fixation sur la pièce tubulaire et une fraction semi cylindrique également munie d'une bride de renforcement 51.

Pour donner au flasque 20 une grande rigidité sous un poids faible, la paroi latérale du flasque est renforcée par des nervures. Ces nervures comprennent une cloison 52, reliant les bords du flasque, et une cloison 54 orthogonale à la première, placée dans le plan médian du flasque. Le flasque est fixé à la pièce tubulaire par une rangée de vis 56, régulièrement réparties.

Le carter de la roue 14 est fixé au flasque par quatre vis 58 décalées par rapport au plan médian du flasque, de façon à être proche des nervures de raidissement. La roue peut avoir une constitution de type connu. Par exemple, elle comporte un carter étanche et une toupie. Le carter est muni d'une plaque de support qui porte les roulements sur lesquels tourne la toupie, le stator du moteur d'entraînement de la toupie et un tachymètre. On ne décrira pas en détail la constitution interne de la roue car elle peut être de type connu.

De façon générale, la toupie est entraînée en rotation à une vitesse élevée, généralement constante. Le moteur d'entraînement de la toupie comporte, par exemple, un moteur couple sans balais et sans fer, généralement à commutation électronique, dont le couple compense les dissipations d'énergie par frottement.

Lors du fonctionnement, il est nécessaire d'évacuer la chaleur dissipée, notamment par les moteurs, et celle due aux frottements sans échauffement excessif et sans gradient thermique excessif dans des composants qui y sont sensibles. Il convient; au surplus, de rechercher une bonne compatibilité des coefficients de dilatation thermique des différents composants.

Dans un satellite, la dissipation thermique ne peut s'effectuer que par conduction ou par rayonnement vers le mur froid du corps du satellite. Le flasque 20 est interposé entre la roue et le mur. On peut le constituer en un matériau bon conducteur de la chaleur, comme l'aluminium, et noircir sa face externe pour améliorer l'émission. Pour diminuer le gradient thermique dans les roulements du cadran, le cône est avantageusement en un matériau ayant une faible conductivité, tel que le titane.

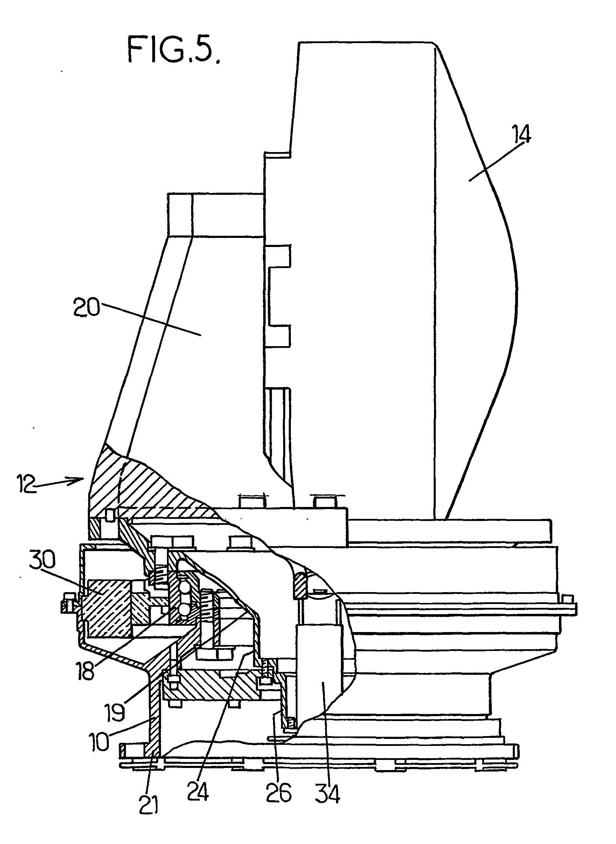

La figure 5, où les composants correspondant à ceux des figures 2 à 4B sont désignés par le même numéro de référence, montre une variante de réalisation. Cette variante est mieux adaptée que le mode de réalisation précédent à l'utilisation d'une roue épaisse, c'est-à-dire d'une roue dont le rapport épaisseur/diamètre est augmenté.

Dans ce cas, la pénétration de la roue 14 dans le cône de la pièce tubulaire 19 est réduite et il n'y a pas de pénétration de la roue dans l'embase 10.

La disposition montrée en figure 5 permet par ailleurs d'avoir un encombrement vertical inférieur à celui d'un actionneur présentant la constitution montrée en figure 2. Le roulement 18 et le moteur 30 sont placés sensiblement à la même hauteur, coaxialement l'un à l'autre. Les moyens de transfert de signaux et de puissance vers l'extérieur comportent un collecteur tournant à bague 34, placé à l'intérieur des tronçons 24 et 26 de la pièce tubulaire 19. Un capteur optique est encore placé sous le tronçon 26.

Dans une autre variante, la disposition relative du moteur 30 et du roulement 18 est inversée par rapport à celle montrée en figure 1. D'un point de vue mécanique, la disposition dans laquelle un roulement de grand diamètre est disposé radialement à l'extérieur du moteur, est favorable du point de vue mécanique. Mais en contrepartie cette disposition conduit à des frottements initiaux élevés au commencement du fonctionnement, alors que l'actionneur est froid.

Dans un autre mode de réalisation encore, le collecteur tournant est placé au même niveau axial que le moteur et le roulement, à l'intérieur de ces derniers dans le sens radial.

D'autres modes de réalisation encore sont possibles. Notamment pour des satellites de relativement faible taille et de faible poids (quelques centaines de kg), on peut être amené à utiliser des roues encore plus épaisses que dans le cas de la figure 5, ce qui réduit la possibilité de pénétration.

De façon générale, il est souhaitable que l'actionneur respecte les conditions suivantes :
- le diamètre maximum du cardan, dans la zone la plus proche de l'axe de rotation de la roue, est inférieur ou égal au diamètre du cylindre balayé par la roue lors de la rotation du cardan, mais en même temps être supérieur à l'épaisseur de la roue,
- le diamètre de l'embase, là où elle est fixée à la plateforme du satellite, est inférieur ou au plus égal au diamètre maximum de la structure support.

## Revendications

1. Actionneur gyroscopique Comprenant une structure support (12) de roue (14) montée sur une embase (10) par des moyens (12) permettant de la faire tourner autour d'un premier axe (2) et portant une roue (14) munie de moyens permettant d'entraîner la toupie de la roue (14) à vitesse élevée autour d'un second axe (x) orthogonal au premier, **caractérisé en ce que** la structure support (12) comporte une pièce tubulaire (19) tournant sur l'embase (10) et un flasque (20) placé d'un seul côté de la roue (14) et fixé d'une part à la roue (14), d'autre part sur la pièce tubulaire (19), le diamètre de la roue (14) et l'emplacement de fixation de la roue sur le flasque (20) étant proportionnés de façon que la roue (14) pénètre axialement dans la pièce tubulaire (19),

2. Actionneur suivant la revendication 1, **caractérisé en ce que** la pièce tubulaire (19) présente une fraction en forme de tronc de cône dont la grande base est fixée au flasque et la partie de grand diamètre du cône porte le rotor du moteur d'orientation (30) la, structure support (12).

3. Actionneur suivant la revendication 2, **caractérisé en ce que** le tronc de cône est prolongé par une partie tubulaire (22) qui porte successivement la partie tournante d'un roulement (12) de montage sur l'embase (10), la partie tournante d'un codeur angulaire et une partie de moyens de transfert de puissance et de signaux entre la structure support (12) et l'embase (10).

4. Actionneur suivant la revendication 3, **caractérisé en ce que** la partie tubulaire (19) prolongeant le cône présente des portions cylindriques (24,26) de diamètres décroissant depuis le niveau du roulement (18).

5. Actionneur suivant la revendication 1, 2 ou 3, **caractérisé en ce que** le flasque (20) présente une partie en forme générale de fraction angulaire de tronc de cône dont la partie terminale la plus large est fixée à la pièce tubulaire (19) et la partie terminale la moins large porte la roue (14).

6. Actionneur suivant la revendication 1, 2 ou 3, **caractérisé en ce que** le flasque (20) présente, de part et d'autre d'une fraction ayant une forme extérieure en tronc de cône, une partie semi-cylindrique de fixation de la roue (14) et une bride de fixation (23) sur la pièce tubulaire (19).

7. Actionneur suivant l'une quelconque, des revendications 1 à 6, **caractérisé en ce que** le flasque (20) présente des nervures internes (52,54) comportant au moins deux cloisons disposées à 90° degrés l'une de l'autre, l'une en face de la roue (14), l'autre (54) perpendiculaire à la première (52).

8. Actionneur suivant l'une quelconque des revendications. 1 à 7, **caractérisé en ce que** la pièce tubulaire (19) tourne sur l'embase (10) par l'intermédiaire d'un roulement (18) comportant deux paliers en contact l'un avec l'autre, constitués par des roulements à billes ou à rouleaux ayant des angles de contact de direction opposée.

9. Actionneur suivant l'une quelconque des revendications 1 à 8, **caractérisé en ce que** la pièce tubulaire (19) est en matériau mauvais conducteur de la chaleur, tel que le titane

10. Actionneur suivant l'une quelconque des revendications 1 à 9, **caractérisé en ce que** la roue (14) pénètre également dans l'embase (10), dans le sens axial.

## Claims

1. A gyroscopic actuator comprising a wheel (14) support structure (12) mounted on a plinth (10) by means (18) making it possible to rotate it about a first axis (Z) and carrying a wheel (14) equipped with means making it possible to drive the spinner of the wheel (14) at high speed about a second axis (X) orthogonal to the first, **characterized in that** the support structure (12) comprises a tubular piece (19) rotating on the plinth (10) and a flange (20) placed on a single side of the wheel (14) and fixed on the one hand to the wheel (14) and on the other hand to the tubular piece (19), the diameter of the wheel (14) and the location of fixing of the wheel to the flange (20) being proportioned in such a way that the wheel (14) penetrates axially into the tubular piece (19).

2. The actuator as claimed in claim 1, **characterized in that** the tubular piece (19) exhibits a fraction in the shape of a truncated cone whose large base is fixed to the flange (20) and the large diameter part of whose cone carries the rotor of the motor (30) for orienting the support structure (12).

3. The actuator as claimed in claim 2, **characterized in that** the truncated cone is extended by a tubular part (22) which carries in succession the rotating part of a bearing (18) for mounting on the plinth (10), the rotating part of an angular coder and a part of means for transferring power and signals between the support structure (12) and the plinth (10).

4. The actuator as claimed in claim 3, **characterized in that** the tubular piece (19) extending the cone exhibits cylindrical portions (24, 26) of diameters that decrease from the level of the bearing (18).

5. The actuator as claimed in claim 1, 2 or 3, **characterized in that** the flange (20) exhibits a part in the general shape of an angular fraction of a truncated cone whose wider end part is fixed to the tubular piece (19) and whose narrower end part carries the wheel (14).

6. The actuator as claimed in claim 1 , 2 or 3, **characterized in that** the flange (20) exhibits, on either side of a fraction having a truncated conical outside shape, a semicylindrical part for fixing the wheel (14) and a rim (23) for fixing onto the tubular piece (19).

7. The actuator as claimed in any one of claims 1 to 6, **characterized in that** the flange (20) exhibits internal ribs (52, 24) comprising at least two partitions disposed at 90° to one another, one (52) facing the wheel (14), the other (54) perpendicular to the first (52).

8. The actuator as claimed in any one of claims 1 to 7, **characterized in that** the tubular piece (19) rotates on the plinth (10) by way of a bearing (18) comprising two journals in contact with one another, consisting of ball bearings or roller bearings having oppositely directed angles of contact.

9. The actuator as claimed in any one of claims 1 to 8, **characterized in that** the tubular piece (19) is made of a material which is a poor conductor of heat, such as titanium.

10. The actuator as claimed in any one of claims 1 to 9, **characterized in that** the wheel (14) also penetrates into the plinth (10), axially.

## Patentansprüche

1. Steuermomentkreisel, umfassend eine Halterung (12) für ein Rad (14), das über Mittel (18) auf einem Sockel (10) angebracht ist, die es ermöglichen, der Sockel (10) um eine erste Achse (Z) zu drehen, und ein Rad tragen (14), das mit Mitteln versehen ist, die es ermöglichen, den Kreiselläufer des Rads (14) auf hoher Geschwindigkeit um eine zweite Achse (X), die zu der ersten senkrecht Ist, mitzunehmen, **dadurch gekennzeichnet, dass** die Halterung (12) ein röhrenförmiges Stück (19), das sich auf dem Sockel (10) dreht, und einen Flansch (20), der auf einer einzigen Seite des Rads (14) angeordnet ist und einerseits am Rad (14) und andererseits am röhrenförmigen Stück (19) befestigt Ist, umfasst, wobei der Durchmesser des Rads (14) und die Befestigungsstelle des Rads am Flansch (20) derart bemessen sind, dass das Rad (14) axial In das röhrenförmige Stück (19) eindringt.

2. Kreisel nach Anspruch 1, **dadurch gekennzeichnet, dass** das röhrenförmige Stück (19) ein kegelstumpfförmiges Teilstück aufweist, dessen große Grundfläche am Flansch (20) befestigt ist, und der Teil mit großem Durchmesser des Kegels den Rotor des Drehantriebs (30) der Halterung (12) trägt.

3. Kreisel nach Anspruch 2, **dadurch gekennzeichnet, dass** der Kegelstumpf durch einen röhrenförmigen Teil (22) verlängert ist, der nacheinander den drehenden Teil eines Montagelagers (18) auf dem Sockel (10), den drehenden Teil eines Winkelcodierers und einen Teil von Mitteln zum Übertragen von Leistung und Signalen zwischen der Halterung (12) und dem Sockel (10) trägt.

4. Kreisel nach Anspruch 3, **dadurch gekennzeichnet, dass** der röhrenförmige Teil (19), der den Kegel verlängert, zylindrische Abschnitte (24, 26) mit Durchmessern aufweist, die ausgehend vom Bereich des Lagers (18) abnehmen.

5. Kreisel nach Anspruch 1, 2 oder 3, **dadurch gekennzeichnet, dass** der Flansch (20) einen Teil aufweist, dessen allgemeine Form die eines Kegeistumpf-Winkelteilstücks ist, dessen größerer Endteil an dem röhrenförmigen Stück (19) befestigt ist und dessen kleinerer Endteil das Rad (14) trägt.

6. Kreisel nach Anspruch 1, 2 oder 3, **dadurch gekennzeichnet, dass** der Flansch (20) auf beiden Seiten eines Teilstücks, dessen äußere Form die eines Kegelstumpfs Ist, einen halbzylindrischen Teil zum Befestigen des Rads (14) und eine Befestigungsschelle (23) auf dem röhrenförmigen Stück (19) aufweist.

7. Kreisel nach einem der Ansprüche 1 bis 6, **dadurch gekennzeichnet, dass** der Flansch (20) Innenrippen (52, 54) aufweist, die mindestens zwei Wände umfassen, die um 90° Grad zu einander angeordnet sind, wobei sich eine (52) gegenüber dem Rad (14) und die andere (54) rechtwinklig zur ersten (52) befindet.

8. Kreisel nach einem der Ansprüche 1 bis 7, **dadurch gekennzeichnet, dass** sich das röhrenförmige Stück (19) auf dem Sockel (10) über ein Wälzlager (18) dreht, das zwei Lagerkörper In Kontakt miteinander umfasst, die aus Kugellagern oder aus Rollenlagern bestehen, die Kontaktwinkel in entgegengesetzter Richtung aufweisen.

9. Kreisel nach einem der Ansprüche 1 bis 8, **dadurch gekennzeichnet, dass** das röhrenförmige Stück (19) aus einem schlecht Wärme leitenden Material, wie etwa Titan, besteht.

10. Kreisel nach einem der Ansprüche 1 bis 9, **dadurch gekennzeichnet, dass** das Rad (14) in Axialrichtung auch In den Sockel (10) eindringt.
